(19) 

Europäisches
Patentamt

European
Patent Office

Office européen
des brevets

(11) **EP 4 527 542 A1**

(12) **EUROPEAN PATENT APPLICATION**
published in accordance with Art. 153(4) EPC

(43) Date of publication:
26.03.2025 Bulletin 2025/13

(21) Application number: 23917813.0

(22) Date of filing: 10.02.2023

(51) International Patent Classification (IPC):
*B23K 35/30* (2006.01)  *B23K 9/29* (2006.01)
*C22C 38/14* (2006.01)

(52) Cooperative Patent Classification (CPC):
B23K 9/29; B23K 35/30; C22C 38/14

(86) International application number:
PCT/KR2023/002019

(87) International publication number:
WO 2024/154855 (25.07.2024 Gazette 2024/30)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.01.2023 KR 20230008984
01.02.2023 KR 20230013804

(71) Applicant: POSCO Co., Ltd
Pohang-si, Gyeongsangbuk-do 37859 (KR)

(72) Inventor: BAE, Gyu-Yeol
Incheon 21985 (KR)

(74) Representative: Meissner Bolte Partnerschaft
mbB
Patentanwälte Rechtsanwälte
Postfach 86 06 24
81633 München (DE)

(54) **GAS SHIELD ARC WELD METAL**

(57) A gas shield arc weld metal is provided. The present invention relates to a weld metal, obtained by gas shield arc welding a weld base material, which comprises, by wt%: 0.001 to 0.30% of C; 0.25% or less of Si (excluding 0%); 0.50 to 3.00% of Mn; 0.030% or less of P (excluding 0%); 0.030% or less of S (excluding 0%); 0.50% or less of Cr (excluding 0%); 0.60% or less of Mo (excluding 0%); less than 0.07% of Al (excluding 0%); 0.40% or less of Ni (excluding 0%); 0.50% or less of Cu (excluding 0%); less than 0.07% of Ti (excluding 0%); and the balance of Fe and other unavoidable impurities, the metal satisfying relational expression 1 and relational expression 2.

EP 4 527 542 A1

**Description**

Technical Field

The present disclosure relates to a gas shielded arc welding metal, and more specifically, to a gas shielded arc welding metal not only having excellent strength and porosity of a weld zone, but also for securing economic efficiency essentially required for manufacturing parts.

Background Art

In the automobile industry, research into lightweight technology for car bodies and parts is emerging as a major issue due to fuel efficiency regulations for environmental protection, such as global warming issues. Chassis parts, which are important to automobile driving performance, also need to use a high-strength steel material to reduce weight in line with this trend.

In order to achieve the weight reduction of such parts, high strength of the material is essential, and in an environment in which repeated fatigue loads are applied, ensuring durability of parts formed of a high-strength steel material may be an important factor.

However, in the case of arc welding, which is mainly used to secure strength when assembling automobile chassis parts, overlap joint welding between the parts is performed by welding of a welding wire, so it is inevitable to impart a geometric shape to a joint portion. This acts as a repeated fatigue stress concentration portion (a notch effect) and becomes a fracture initiation point, which may ultimately lead to a decrease in the durability of the part, so there may be a limitation that the advantage of applying a high-strength steel material is lost.

Therefore, in order to improve fatigue characteristics of the weld zone, it is most important to reduce an angle (a toe angle) of a bead end, which is a main stress concentration portion. In addition, controlling a material and stress of a toe portion may also be an important factor. In addition, as described above, due to the trend toward high strength and weight reduction of the parts, demand for rust prevention to prevent penetrating corrosion as the material is thinned, the adoption of a plated steel material is increasing, but in particular, a welding metal in an arc weld zone has limitations in that corrosion resistance after painting is inferior to that of a base material because there is no plating layer. Accordingly, there is a problem of the occurrence of early corrosion of a weld zone of chassis parts made of a plated steel sheet in harsh corrosive environments when driving a car, leading to deterioration in fatigue characteristics. Meanwhile, during gas shielded arc welding of the plated steel material, a large number of pore defects in the form of pits and blowholes may occur in a weld bead due to the generation of vapor such as zinc, or the like, so that there may be a concern that the strength of the weld zone may be reduced and as a result, which may cause a problem of reduced welding productivity. In addition, in the case of a general unplated steel material, slag generated in the weld bead during gas shielded arc welding may cause poor painting defects, which may reduce corrosion resistance after painting. Therefore, there may be a problem in that the cost may increase due to post-processing processes such as picking or brushing, to remove the slag after welding when manufacturing parts.

Recently, the development of lightweight chassis parts for next-generation eco-friendly vehicles is actively being performed, and in particular, the development of a welding technology that can improve the characteristics of a weld zone while ensuring economic feasibility is becoming an important issue.

[Prior art Document]

[Patent Document]

(Patent Document 1) Japanese Patent Publication No. 2019-118274

Summary of Invention

Technical Problem

An aspect of the present disclosure is to provide a gas shielded arc welding metal having excellent strength and porosity of a weld zone that can secure excellent strength and porosity of the weld zone in the automobile industry. A welding metal refers to a metal in which a base material to be welded and a welding wire are melted and mixed with each other.

An object of the present disclosure is not limited to the above description. The object of the present disclosure will be understood from the entire content of the present specification, and a person skilled in the art to which the present disclosure pertains will understand an additional object of the present disclosure without difficulty.

Solution to Problem

Therefore, according to an aspect of the present disclosure,
a welding metal obtained by gas shielded arc welding a welding base material is provided, the gas shielded arc welding metal including by wt%: 0.001 to 0.30% of C, 0.25% or less (excluding 0%) of Si, 0.50 to 3.00% of Mn, 0.030% or less of P (excluding 0%), 0.030% or less of S (excluding 0%), 0.50% or less of Cr (excluding 0%), 0.60% or less of Mo(excluding 0%), less than 0.07% of Al (excluding 0%), 0.40% or less of Ni (excluding 0%), 0.50% or less of Cu (excluding 0%),less than 0.07% of Ti (excluding 0%), with a balance of Fe and other unavoidable impurities, the welding metal satisfying Relational expression 1 and Relational expression 2.

$$[\text{Relational expression 1}]$$

$$3.5 \leq [\text{Si}] \times 100/[\text{Mn}] \leq 8.5$$

$$[\text{Relational expression 2}]$$

$$[\text{Ti}] + [\text{Al}] < 0.07$$

In Relational expression 1 and Relational expression 2, [Si], [Mn], [Ti], and [Al] represent a weight percent content of each element in parentheses for a welding metal.
The welding metal may include Si in the range of 0.05 to 0.15%.
The welding metal may further include at least one of 0.10% or less of Nb, 0.10% or less of V, and 0.10% or less of Zr.
The welding metal may further include 0.01% or less of B.
The welding metal may satisfy a length fraction occupied by pore defects of 10% or less (including 0%), with respect to the entire length of the welding metal.
The welding base material may be a hot-dip galvanized steel sheet on which a hot-dip galvanized layer is formed on the surface.
The welding base material may include by wt%: 0.04 to 0.18% of C, 2.0% or less of Si (including 0%), 0.5 to 3.0% of Mn, 2.0% or less of Cr (including 0%), 2.0% or less of Mo (including 0%), 0.01 to 0.1% of Al, 0.05% or less of P (excluding 0%), 0.05% or less of S (excluding 0%), with a balance of Fe and other unavoidable impurities.
The welding base material may further include at least one of 0.20% or less of Ti, 0.10% or less of Nb, and 0.10% or less of Cu.
The welding base material may have a thickness of 0.8 to 4.0 mm.
In addition, according to another aspect of the present disclosure,
provided is an automotive part having the welding metal.

Advantageous Effects of Invention

As set forth above, according to the present disclosure described above, it is possible to effectively provide a gas shielded arc welding metal having excellent strength and porosity of a weld zone as a next-generation welding technology that has secured performance/cost competitiveness in line with the era of the popularization of electric vehicles.

Best Mode for Invention

Hereinafter, the present disclosure will be described.
There is a problem in which pore defects occur in a weld zone due to the generation of zinc vapor when welding a galvanized steel sheet. In this case, if a content of Si, which is a deoxidizer of welding metal components, is lowered to a certain level, the viscosity of molten metal is lowered, facilitating the discharge of zinc vapor, and as O(oxygen) generated by the dissociation of $CO_2$ in a protective gas at high temperatures during welding reacts more actively with Zn in the plating layer to form Zn-based oxides, thereby effectively lowering zinc vapor pressure to stabilize an arc and suppressing the occurrence of pore defects. However, the inventors of the present disclosure have confirmed through research results that when Ti or Al, which are strong deoxidizers among the welding metal components, are contained in a certain amount or more, the oxidation reaction of Zn is inhibited, causing arc instability, an increase in pore defects, and a decrease in the strength of the weld zone. In particular, when the Ti+Al value is 0.70% or more, it was confirmed that the increase in pore defects was significant, and thus it was impossible to secure a welding metal having excellent strength and porosity of the weld zone.

Therefore, according to an aspect of the present disclosure, a welding metal obtained by gas shielded arc welding a welding base material of the present disclosure includes by weight%: 0.001 to 0.30% of C, 0.25% or less (excluding 0%) of Si, 0.50 to 3.00% of Mn, 0.030% or less of P (excluding 0%), 0.030% or less of S (excluding 0%), 0.50% or less of Cr (excluding 0%), 0.60% or less of Mo(excluding 0%), less than 0.07% of Al (excluding 0%), 0.40% or less of Ni (excluding 0%), 0.50% or less of Cu (excluding 0%), less than 0.07% of Ti (excluding 0%), with a balance of Fe and other unavoidable impurities, the welding metal satisfying Relational expression 1 and Relational expression 2.

$$[\text{Relational expression 1}]$$

$$3.5 \le [\text{Si}] \times 100/[\text{Mn}] \le 8.5$$

$$[\text{Relational expression 2}]$$

$$[\text{Ti}] + [\text{Al}] < 0.07$$

Hereinafter, a gas shielded arc welding metal according to an embodiment of the present disclosure will be described. First, in the welding metal of the present disclosure, the reasons for adding each component and the reasons for limiting the content thereof are explained in detail. It should be noted that the content of each component described below is based on weight % unless specifically stated.

Carbon (C): 0.001 to 0.30%

Carbon (C) is a major element that can lower a temperature at which transformation of acicular ferrite, bainite, and martensite is initiated through non-diffusion transformation as a welding metal is continuously cooled in a high-temperature austenite phase during a solidification process. When the content of C is less than 0.001%, not only does the hardenability decrease, making it difficult to secure the sufficient strength of welding metal, but also a low-temperature transformation initiation temperature cannot be sufficiently lowered according to the principle described above, so an effect of offsetting a tensile residual stress in the weld zone due to a low-temperature transformation expansion effect during a cooling process may be significantly reduced, and there may be a disadvantage in that a high-angle grain boundary structure with a large orientation angle difference between grains may not be formed. On the other hand, when the C content exceeds 0.30%, not only does the viscosity of molten metal decrease, resulting in a poor bead shape, but it also hardens a welding metal excessively, thereby reducing the toughness.

Silicon (Si): 0.25% or less (excluding 0%)

Silicon (Si) is an element promoting deoxidation of molten metal during arc welding (a deoxidizing element), and is an element, which is advantageous in suppressing the occurrence of blowholes, and increasing a low-temperature transformation initiation temperature. However, when welding a galvanized steel sheet, a content of Si among the welding metal components may be lowered to promote the oxidation of Zn and lower zinc vapor pressure, thereby preventing the occurrence of pore defects in a weld zone. Meanwhile, when the content of Si exceeds 0.25%, a large amount of non-conductive slag may be generated, which may cause coating defects in the weld zone, and excessive deoxidation may cause insufficient surface activation of the weld zone, which may reduce the penetrability of molten metal. Therefore, in the present disclosure, the content of Si is preferably controlled to be 0.25% or less.
More preferably, the content of Si is controlled to be in the range of 0.05 to 0.15%. when the content of Si is too low, the deoxidation effect becomes insufficient, which may easily cause blowholes to occur.

Manganese (Mn): 0.5 to 3.0%

Manganese (Mn) is a deoxidizing element and is an element, which is advantageous in suppressing the occurrence of blowholes by promoting the deoxidation of molten metal during arc welding, and like C, is an element reducing a low-temperature transformation initiation temperature. When the content of Mn is less than 0.5%, a deoxidation effect may be insufficient, which may easily cause blowholes to occur. However, when welding a galvanized steel sheet, when the content of Mn is excessively high, the oxidation of Zn may be hindered and zinc vapor pressure may be increased, which may promote arc instability and the occurrence of pore defects in the weld zone. Meanwhile, when the content of Mn exceeds 3.0%, when the viscosity of molten metal becomes excessively high, so when a welding speed is high, molten metal cannot properly flow into a welded portion, so a humping bead may be formed, which may cause a disadvantage of bead shape defects. More preferably, the content of Mn is limited to be 2.5% or less.

Chromium (Cr): 0.50% or less (excluding 0%)

Chromium (Cr) is a ferrite stabilizing element, and is an element, which is advantageous for lowering a low-temperature transformation initiation temperature, and improving strength by securing the hardenability of welding metal. When the content of Cr exceeds 0.50%, there may be a disadvantage in that the brittleness of the welding metal may increase unnecessarily in some cases, making it difficult to secure sufficient toughness. The content of Cr is more preferably 0.30% or less, even more preferably 0.20% or less, and most preferably 0.10% or less.

Molybdenum (Mo): 0.60% or less (excluding 0%)

Molybdenum (Mo) is a ferrite stabilizing element, and is an element which is advantageous in securing the hardenability for improving the strength of welding metal. When the content of Mo exceeds 0.60%, there may be a disadvantage in that the toughness of the welding metal is reduced in some cases.

Phosphorous (P): 0.030% or less (excluding 0%)

Phosphorous (P) is an element which is generally mixed as an inevitable impurity in steel, and is also an element which is commonly included in an arc welding solid wire as a common impurity. When the P content exceeds 0.030%, there may be a disadvantage in that high-temperature cracking of the welding metal becomes significant.

Sulfur (S): 0.030% or less (excluding 0%)

Sulfur (S) is an element which is generally mixed as an inevitable impurity in steel, and is also an element which is included in an arc welding solid wire as an impurity. When the S content exceeds 0.030%, the toughness of the welding metal may deteriorate in some cases, and the surface tension of molten metal becomes insufficient during welding, which may cause a molten portion to flow excessively due to gravity during high-speed vertical welding (welding from top to bottom when performing vertical welding), resulting in a poor weld bead shape.

Aluminum (Al): less than 0.07% (excluding 0%)

Aluminum (Al) is a deoxidizing element that can improve the strength of welding metal by promoting the deoxidation of molten metal during arc welding even in a small amount of Al. To secure the above-described effect, 0% is excluded as a lower limit of the Al content. However, due to the deoxidization effect of Al, it can hinder the oxidation reaction of Zn when welding a galvanized steel sheet, which can promote the occurrence of pore defects in a weld zone due to an increase in zinc vapor pressure and arc instability. When the Al content is 0.07% or more, the formation of Al-based oxides increases, and in some cases, the strength and toughness of welding metal may decrease, and there may be a disadvantage in that the weld zone becomes susceptible to electrodeposition coating defects due to non-conductive oxides.

Titanium (Ti): less than 0.07% (excluding 0%)

Titanium (Ti) is a deoxidizing element that can improve the strength of welding metal by promoting the deoxidation of molten metal during arc welding even in a small amount of Ti. Ti also facilitates the development of acicular ferrite, which can improve the toughness of a weld zone. In order to secure the above-described effect, 0% is excluded as a lower limit of Ti content. However, due to the deoxidization effect of Ti, it can hinder the oxidation reaction of Zn when welding a galvanized steel sheet, thereby promoting the occurrence of pore defects in the weld zone due to an increase in zinc vapor pressure and arc instability. When the Ti content is 0.07% or more, the formation of Ti-based oxides increases, so that there may be a disadvantage in that the strength and toughness of welding metal decrease in some cases.

Nickle (Ni): 0.40% or less (excluding 0%)

Nickel (Ni) is an element that can improve the strength and toughness of welding metal. In order to secure the above-described effect, 0% is excluded as a lower limit of a Ni content. However, when the Ni content exceeds 0.40%, there may be a disadvantage of becoming sensitive to cracking, so the Ni content is set to 0.40% or less. The Ni content is more preferably 0.30% or less, more preferably 0.20% or less, and most preferably 0.10% or less.

Copper (Cu): 0.50% or less (including 0%)

Copper (Cu) is an element effective in improving the strength of welding metal. However, when the content of Cu exceeds 0.50%, there may be a disadvantage in that cracking susceptibility of the welding metal increases. The Cu content is more preferably 0.45% or less, even more preferably 0.40% or less, and most preferably 0.30% or less. Meanwhile, in order to sufficiently obtain the strength improvement effect, the welding metal may contain 0.01% or more of the Cu.

The welding metal of the present disclosure may optionally further include at least one of 0.10% or less of Nb, 0.10% or less of V, and 0.10% or less of Zr.

Niobium (Nb): 0.10% or less

Niobium (Nb) is an element that can improve the strength and toughness of welding metal by increasing hardenability and densifying a microstructure. In addition, Nb has an effect of improving a flow of molten metal and stabilizing an arc during arc welding. In order to secure the above-described effect, 0% is excluded as a lower limit of an Nb content. However, when the Nb content exceeds 0.10%, there may be a disadvantage in that a low-melting point compound is formed at a grain boundary, making high-temperature cracking more likely to occur.

Vanadium (V): 0.10% or less

Vanadium (V) is an element that can improve the strength and toughness of welding metal by increasing hardenability and densifying a microstructure. In addition, V is also a precipitation strengthening element that can improve the strength of welding metal by generating carbonitrides. However, when the V content exceeds 0.10%, there may be a disadvantage in that the toughness of welding metal is reduced in some cases due to excessive strength caused by excessive precipitates. Therefore, the V content is set to 0.10% or less.

Zirconium (Zr): 0.10% or less

Zirconium (Zr) is an element promoting the deoxidation of molten metal during arc welding (a deoxidizing element), and is an element which is advantageous in suppressing the occurrence of blowholes. However, when the Zr content exceeds 0.10%, there may be a disadvantage in that electrodeposition coating properties of a weld zone are reduced. Therefore, the content of Zr is set to be 0.10% or less.

In addition, the welding metal of the present disclosure may optionally further include 0.01% or less of B.

Boron (B): 0.01% or less

Boron (B) is an element that can improve the strength of welding metal by increasing hardenability thereof. However, when the content of B exceeds 0.01%, there may be a disadvantage in that the toughness of welding metal may deteriorate in some cases due to excessive hardenability. Therefore, the content of B is set to be 0.01% or less.

The remaining component of the present disclosure is iron (Fe). However, since in the common manufacturing process, unintended impurities may be inevitably mixed from raw materials or the surrounding environment, the component may not be excluded. Since these impurities are known to any person skilled in the common manufacturing process, the entire contents thereof are not particularly mentioned in the present specification.

Meanwhile, the welding metal of the present disclosure includes Mn and Si so as to satisfy the following Relational expression 1. By satisfying the following Relational expression 1, the strength and porosity of welding metal described above may be improved. If a value defined by the Relational expression 1 is less than 3.5, the deoxidation effect of the weld zone is insufficient, which may cause a problem of insufficient strength due to reduced porosity, and if the value defined by Relational expression 1 exceeds 8.5, not only can the viscosity of the welding metal increase, but also the zinc vapor pressure during welding may increase according to the above-described principle, which may result in arc instability and reduced porosity, resulting in insufficient strength. In addition, the problem of poor electrodeposition coating properties may occur due to an increase in the Si-based non-conductive oxides. More preferably, an upper limit of the value defined by the Relational expression 1 is controlled to be 6.0.

[Relational expression 1]

$$3.5 \leq [Si] \times 100/[Mn] \leq 8.5$$

In Relational expression 1 and Relational expression 2 above, [Si] and [Mn], [Ti] represent a weight percent content of each element in parentheses for a welding metal.

In addition, the welding metal of the present disclosure is required to contain Ti and Al so as to satisfy the following Relational expression 2.

When welding a galvanized steel sheet, pore defects may occur in the weld zone due to the generation of zinc vapor, and in this case, if the content of Si, a deoxidizer among the welding metal components is lowered to a certain level or more, the viscosity of molten metal may decrease, making the discharge of zinc vapor easier, and O (oxygen) generated by the dissociation of $CO_2$ in the protective gas at high temperatures during welding reacts more actively with Zn in the plating layer to form Zn-based oxides, which may effectively lower the zinc vapor pressure, stabilize the arc, and suppress the generation of pore defects. However, when Ti or Al, which are strong deoxidizers among the welding metal components, are contained in a certain amount or more, the oxidation reaction of Zn is hindered, causing arc instability, an increase in pore defects, and a decrease in the strength in the weld zone even at a low Si content. In particular, when the Ti+Al value is 0.07% or more, the increase in pore defects is evident, making it impossible to secure a welding metal having excellent strength and porosity of the weld zone.

More specifically, the affinity of a metal for oxygen, that is, the thermodynamic stability of each of the metal elements when combining with oxygen at a certain temperature, can be easily determined through the well-known Ellingham diagram, and the Gibbs free energy decreases in the order of Al > Ti > Si > Zn, so it combines more easily with oxygen, thereby increasing the stability of the oxide. Meanwhile, the temperature at which each of the metal elements begins to combine with oxygen, i.e. a boiling point for $Al_2O_3$ is 2,977°C, is 2,972°C for $TiO_2$, is 2,230°C for $SiO_2$, and is 2,360°C for ZnO, and Al and Ti can easily combine with oxygen first at high temperatures thermodynamically more stably than Si and Zn. Therefore, as the welding metal, molten at a temperature of about 3,000 to 5,000°C, which is a center temperature of arc during welding, is slowly cooled and solidified, and in the process, the content of Si is lowered, and oxidation occurs before Zn due to the increased contents of Al and Ti, before Zn can more easily combine with O. Therefore, the occurrence of pore defects in the weld zone due to increased Zn vapor pressure can also become sensitive.

$$\text{[Relational expression 2]}$$

$$\text{[Ti] + [Al] < 0.07}$$

In Relational expression 2 above, [Ti] and [Al] represent a weight percent content of each element in parentheses for a welding metal.

In addition, in the present invention, the welding metal may satisfy a length fraction occupied by pore defects of 10% or less (including 0%), with respect to the entire length of the welding metal. Therefore, in the present disclosure, parts such as automobile parts, or the like, having a weld zone having excellent porosity, may be effectively provided.

In addition, in the present disclosure, as a welding base material used for forming the welding metal, a hot-dip galvanized steel sheet having a hot-dip galvanized layer formed on the surface thereof may be used, and it is preferable that a thickness of the hot-dip galvanized layer is 1 to 20 μm and a single-sided plating amount is 1 to 120 g/m².

In addition, in the present disclosure, it is not limited to the alloy composition of the welding base material, and for example, the welding base material may include by wt%, 0.04 to 0.18% of C, 2.0% or less of Si (including 0%), 0.5 to 3.0% of Mn, 2.0% or less of Cr (including 0%), 2.0% or less (including 0%) of Mo, 0.01 to 0.1% of Al, 0.05% or less (excluding 0%) of P, 0.05% or less (excluding 0%) of S, with a balance of Fe and other unavoidable impurities.

The welding base material may optionally further include at least one of 0.2% or less of Ti, 0.1% or less of Nb, and 0.1% or less of Cu.

In addition, the welding base material may have a thickness of 0.8 to 4.0 mm.

In addition, in the present invention, it is not limited to a specific composition of a welding wire forming the welding metal. For example, a solid wire for welding including by wt%, 0.001 to 0.30% of C, 0.25% or less (excluding 0%) of Si, 0.50 to 3.00% of Mn, 0.030% or less (excluding 0%) of P, 0.030% or less (excluding 0%) of S, 1.50% or less (excluding 0%) of Cr, 0.60% or less (excluding 0%) of Mo, less than 0.10% (excluding 0%) of Al, 0.40% or less (excluding 0%) of Ni, 0.50% or less (excluding 0%) of Cu, and less than 0.10% (excluding 0%) of Ti, with a balance of Fe, and other unavoidable impurities, may be used. Optionally, the wire composition may further include at least one of 0.10% or less of Nb, 0.10% or less of V, and 0.10% or less of Zr, or 0.01% or less of B.

Meanwhile, in the present disclosure, the type of shielding gas used for welding of the welding base material is not particularly limited, and 100% $CO_2$ gas, Ar+20$CO_2$ gas, Ar+10%$CO_2$ gas, Ar+5%$CO_2$ gas, Ar+2%$O_2$ gas, and the like, may be used as a shielding gas. However, in particular, when Ar+5 to 20%$CO_2$ is used as the shielding gas, the remarkable effects of the present disclosure may be exhibited. That is, in order to secure a tensile strength in the weld zone without the occurrence of welding metal or fracture of a melting line in the present disclosure, it is preferable to use 5 to 20% $CO_2$ mixed with Ar as a protective gas during the welding.

Mode for Invention

Hereinafter, the present disclosure will be specifically described through the following Examples. However, it should be noted that the following examples are only for describing the present disclosure by illustration, and not intended to limit the right scope of the present disclosure. The reason is that the right scope of the present disclosure is determined by the matters described in the claims and reasonably inferred therefrom.

(Example)

Two sheets of each of three types of base materials of a hot-dip galvanized steel sheet having an alloy composition shown in Table 1 below were prepared, wherein three types of base materials of the hot-dip galvanized steel sheet having an alloy composition as shown in Table 1 below, and the three types of steel materials are as follows: a steel material 1 having a tensile strength of 540 MPa, a steel material 2 having a tensile strength of 670 MPa, and a steel material 3 having a tensile strength of 780 MPa, and each of them having a thickness of 2.0 mm, a length of 200 mm, a width of 150 mm, and a single-sided coating weight 85 g/m$^2$. A large number of gas shielded arc welding solid wires having various alloy compositions were prepared.

Next, the hot-dip galvanized steel sheet was overlap joint welded using the welding solid wire, respectively. In this case, Pulse DC (protective gas: Ar + 10~20% $CO_2$) was used as a welding method, a flow rate of shielding gas was 20l/min, an angle of a welding torch with respect to a vertical direction of the base material was 45°, a wire protrusion length was 15 mm, and welding current/voltage/speed conditions were 200A-20V-80cm/min. In addition, a gap of an overlap joint portion was set to 0 mm, and a length of the overlap joint portion was set to 10 mm.

Meanwhile, welding was initiated at a position 10 mm from a starting point of the welding base material in a longitudinal direction, and after welding was performed for a length of 180 mm, welding was terminated at the position of 10 mm from an end point on an opposite side to the welding start position.

For each weld zone formed by the welding, a microstructure of a cross-sectional portion of the weld zone perpendicular to the longitudinal direction in a central portion of the weld zone in the longitudinal direction was observed with an optical microscope to confirm a region of the welding metal in advance, and the region was cut and processed into a fine chip shape. Then, for each chip sample, a chemical composition of the welding metal was measured through emission spectrometry using a high-frequency inductively coupled plasma (ICP), and the results thereof were shown in Table 2 below.

In addition, a porosity was measured for each weld zone formed by the welding, and the results thereof are shown in Table 3 below. In this case, a specific method of measuring a porosity is as follows. By irradiating the welding specimen manufactured as above, with X-rays, a length of each pore distributed in the weld zone was measured, and the porosity of the weld zone was calculated by dividing the sum of the lengths of each of the pores by the total length of the weld zone. In this case, a section corresponding to 10 mm from the starting point and the end point of the weld zone was excluded from the measurement, and the porosity was taken as an average value of the measured values of three welding specimens.

In addition, a tensile test was performed on the formed weld zone, and a position at which fracture occurred was observed with the naked eye, and in this case, if a welding base material or a heat-affected zone is fractured, it was evaluated as pass (O), and if a welding metal is fractured, it was evaluated as fail (X). A specific tensile test method herein is as follows. From each of the welding specimens manufactured above, a tensile specimen having a width of 30 mm and a length of 250 mm was processed, and a uniaxial tensile test was performed at a speed of 10 mm/min, and then a fracture position was investigated. In this case, the tensile test results were verified for reproducibility by evaluating three welding specimens.

[Table 1]

| Division | Alloy composition of base material (weight %) | | | | | | |
|---|---|---|---|---|---|---|---|
| | C | Si | Mn | P | S | Al | Ti |
| Steel material 1 | 0.06 | 0.06 | 0.90 | 0.010 | 0.002 | 0.025 | 0.01 |
| Steel material 2 | 0.08 | 0.05 | 1.20 | 0.007 | 0.004 | 0.030 | 0.04 |
| Steel material 3 | 0.07 | 0.30 | 1.75 | 0.008 | 0.005 | 0.030 | 0.10 |

In Table 1 above, the remaining components are Fe and inevitable impurities.

[Table 2]

| divi sion | No. | Steel ty Pes | Alloy composition of welding metal(weight%) | | | | | | | | | | | | Rel ati ona l exp res sio n 1 | Rel ati ona l exp res sio n 2 |
|---|---|---|---|---|---|---|---|---|---|---|---|---|---|---|---|---|
| | | | C | Si | Mn | P | S | Cu | Ni | Ti | Cr | Mo | Al | B | | |
| Inventive example | 1 | Steel material 1 | 0.07 | 0.06 | 1.29 | 0.01 1 | 0.00 3 | 0.08 | 0.15 | 0.05 5 | 0.01 0 | 0.00 2 | 0.00 3 | 0.00 3 | 4.7 | 0.0 6 |
| | 2 | | 0.07 | 0.08 | 1. 33 | 0.01 0 | 0.00 5 | 0.09 | 0.13 | 0.05 8 | 0.01 6 | 0.00 3 | 0.00 6 | - | 6.0 | 0.0 6 |
| | 3 | | 0.07 | 0.07 | 1.35 | 0.00 6 | 0.00 3 | 0.07 | 0.01 | 0.04 5 | 0.01 4 | 0.00 2 | 0.00 8 | 0.00 2 | 5.2 | 0.0 5 |
| | 4 | | 0.07 | 0.05 | 1. 44 | 0.00 8 | 0.00 6 | 0.10 | 0.18 | 0.03 6 | 0.00 8 | 0.00 1 | 0.00 7 | - | 3.5 | 0.0 4 |
| | 5 | | 0.07 | 0.06 | 1.32 | 0.01 1 | 0.00 4 | 0.09 | 0.01 | 0.00 7 | 0.02 2 | 0.00 4 | 0.00 4 | 0.00 2 | 4.5 | 0.0 1 |
| | 6 | Steel material 2 | 0.08 | 0.07 | 1. 44 | 0.00 9 | 0.00 3 | 0.08 | 0.15 | 0.03 7 | 0.01 0 | 0.00 2 | 0.01 8 | 0.00 3 | 4.9 | 0.0 6 |
| | 7 | | 0.08 | 0.09 | 1. 46 | 0.00 9 | 0.00 6 | 0.09 | 0.13 | 0.03 9 | 0.01 6 | 0.00 3 | 0.02 1 | - | 6.2 | 0.0 6 |
| | 8 | | 0.08 | 0.08 | 1. 48 | 0.00 7 | 0.00 5 | 0.07 | 0.01 | 0.03 2 | 0.01 4 | 0.00 2 | 0.01 8 | 0.00 2 | 5.4 | 0.0 5 |
| | 9 | | 0.08 | 0.06 | 1. 66 | 0.00 8 | 0.00 6 | 0.10 | 0.18 | 0.03 5 | 0.00 8 | 0.00 1 | 0.02 2 | - | 3.6 | 0.0 6 |
| | 10 | | 0.08 | 0.08 | 1. 47 | 0.01 0 | 0.00 5 | 0.09 | 0.01 | 0.02 1 | 0.02 2 | 0.00 4 | 0.01 9 | 0.00 2 | 5.4 | 0.0 4 |
| | 11 | Steel material 3 | 0.06 | 0.11 | 1.72 | 0.01 0 | 0.00 4 | 0.08 | 0.15 | 0.04 9 | 0.16 0 | 0.05 2 | 0.01 2 | 0.00 3 | 6.4 | 0.0 6 |
| | 12 | | 0.08 | 0.15 | 1.76 | 0.00 9 | 0.00 6 | 0.09 | 0.13 | 0.05 1 | 0.16 6 | 0.05 3 | 0.01 3 | - | 8.5 | 0.0 6 |
| | 13 | | 0.08 | 0.13 | 1.75 | 0.00 8 | 0.00 5 | 0.07 | 0.01 | 0.04 5 | 0.16 4 | 0.05 2 | 0.01 5 | 0.00 2 | 7.4 | 0.0 6 |
| | 14 | | 0.08 | 0.12 | 2.10 | 0.00 9 | 0.00 7 | 0.10 | 0.18 | 0.04 2 | 0.15 8 | 0.05 1 | 0.01 4 | - | 5.7 | 0.0 6 |
| | 15 | | 0.07 | 0.11 | 1.74 | 0.01 0 | 0.00 6 | 0.09 | 0.01 | 0.03 4 | 0.17 2 | 0.05 4 | 0.01 9 | 0.00 2 | 6.3 | 0.0 5 |

(continued)

| division | No. | Steel types | Alloy composition of welding metal(weight%) | | | | | | | | | | | | Relational expression 1 | Relational expression 2 |
|---|---|---|---|---|---|---|---|---|---|---|---|---|---|---|---|---|
| | | | C | Si | Mn | P | S | Cu | Ni | Ti | Cr | Mo | Al | B | | |
| Comparative example | 1 | Steel material 1 | 0.08 | 0.04 | 1.18 | 0.009 | 0.004 | 0.13 | 0.19 | 0.071 | 0.010 | 0.004 | 0.003 | 0.002 | 3.4 | 0.07 |
| | 2 | | 0.07 | 0.05 | 1.28 | 0.006 | 0.003 | 0.09 | 0.15 | 0.072 | 0.008 | 0.002 | 0.011 | 0.002 | 3.9 | 0.08 |
| | 3 | | 0.07 | 0.05 | 1.35 | 0.007 | 0.004 | 0.09 | 0.00 | 0.087 | 0.008 | 0.004 | 0.018 | 0.002 | 3.7 | 0.11 |
| | 4 | | 0.08 | 0.04 | 1.20 | 0.007 | 0.004 | 0.14 | 0.01 | 0.113 | 0.013 | 0.002 | 0.012 | - | 3.3 | 0.13 |
| | 5 | | 0.06 | 0.11 | 1.26 | 0.008 | 0.003 | 0.13 | 0.01 | 0.133 | 0.015 | 0.002 | 0.007 | 0.001 | 8.7 | 0.104 |
| | 6 | | 0.08 | 0.15 | 1.35 | 0.010 | 0.005 | 0.10 | 0.02 | 0.044 | 0.009 | 0.003 | 0.008 | 0.002 | 11.1 | 0.05 |
| | 7 | | 0.07 | 0.12 | 1.28 | 0.009 | 0.004 | 0.11 | 0.02 | 0.035 | 0.005 | 0.005 | 0.009 | - | 9.4 | 0.04 |
| | 8 | | 0.07 | 0.12 | 1.4 | 0.01 | 0.005 | 0.09 | 0.13 | 0.054 | 0.016 | 0.003 | 0.006 | 0.001 | 8.6 | 0.06 |
| | 9 | | 0.07 | 0.07 | 1.30 | 0.011 | 0.003 | 0.08 | 0.15 | 0.068 | 0.010 | 0.002 | 0.002 | 0.003 | 5.4 | 0.07 |
| | 10 | | 0.07 | 0.07 | 1.38 | 0.010 | 0.005 | 0.09 | 0.13 | 0.057 | 0.016 | 0.003 | 0.037 | 0.001 | 5.1 | 0.09 |
| | 11 | Steel material 2 | 0.09 | 0.05 | 1.60 | 0.008 | 0.005 | 0.13 | 0.19 | 0.069 | 0.010 | 0.004 | 0.018 | 0.002 | 3.1 | 0.09 |
| | 12 | | 0.08 | 0.06 | 1.43 | 0.005 | 0.004 | 0.09 | 0.15 | 0.069 | 0.008 | 0.002 | 0.026 | 0.002 | 4.2 | 0.10 |
| | 13 | | 0.08 | 0.06 | 1.50 | 0.005 | 0.005 | 0.09 | 0.00 | 0.080 | 0.008 | 0.004 | 0.033 | 0.002 | 4.0 | 0.11 |
| | 14 | | 0.09 | 0.04 | 1.35 | 0.006 | 0.005 | 0.14 | 0.01 | 0.100 | 0.013 | 0.002 | 0.027 | - | 3.0 | 0.13 |
| | 15 | | 0.07 | 0.14 | 1.63 | 0.006 | 0.004 | 0.13 | 0.01 | 0.115 | 0.015 | 0.002 | 0.022 | 0.001 | 8.6 | 0.14 |
| | 16 | | 0.09 | 0.16 | 1.50 | 0.008 | 0.006 | 0.10 | 0.02 | 0.038 | 0.009 | 0.003 | 0.018 | 0.002 | 10.7 | 0.06 |
| | 17 | | 0.08 | 0.13 | 1.43 | 0.007 | 0.005 | 0.11 | 0.02 | 0.037 | 0.005 | 0.005 | 0.024 | - | 9.1 | 0.06 |
| | 18 | | 0.08 | 0.15 | 1.72 | 0.009 | 0.006 | 0.09 | 0.13 | 0.044 | 0.010 | 0.003 | 0.017 | 0.001 | 8.7 | 0.06 |
| | 19 | | 0.08 | 0.08 | 1.45 | 0.009 | 0.004 | 0.08 | 0.15 | 0.066 | 0.010 | 0.002 | 0.019 | 0.003 | 5.5 | 0.09 |
| | 20 | | 0.08 | 0.09 | 1.53 | 0.009 | 0.006 | 0.09 | 0.13 | 0.058 | 0.016 | 0.003 | 0.052 | 0.001 | 5.9 | 0.11 |

EP 4 527 542 A1

| division | No. | Steel types | Alloy composition of welding metal(weight%) | | | | | | | | | | | | Relational expression 1 | Relational expression 2 |
|---|---|---|---|---|---|---|---|---|---|---|---|---|---|---|---|---|
| | | | C | Si | Mn | P | S | Cu | Ni | Ti | Cr | Mo | Al | B | | |
| | 21 | Steel material 3 | 0.08 | 0.16 | 1.72 | 0.008 | 0.006 | 0.13 | 0.19 | 0.099 | 0.160 | 0.054 | 0.018 | 0.002 | 9.3 | 0.12 |
| | 22 | | 0.07 | 0.17 | 1.71 | 0.005 | 0.005 | 0.09 | 0.15 | 0.110 | 0.158 | 0.052 | 0.026 | 0.002 | 9.9 | 0.14 |
| | 23 | | 0.07 | 0.17 | 1.77 | 0.006 | 0.005 | 0.09 | 0.00 | 0.110 | 0.158 | 0.054 | 0.033 | 0.002 | 9.6 | 0.14 |
| | 24 | | 0.09 | 0.16 | 1.62 | 0.006 | 0.006 | 0.14 | 0.01 | 0.130 | 0.163 | 0.052 | 0.027 | - | 9.9 | 0.16 |
| | 25 | | 0.06 | 0.22 | 1.90 | 0.007 | 0.005 | 0.13 | 0.01 | 0.145 | 0.165 | 0.052 | 0.057 | 0.001 | 11.6 | 0.20 |
| | 26 | | 0.09 | 0.27 | 1.78 | 0.009 | 0.007 | 0.10 | 0.02 | 0.078 | 0.159 | 0.053 | 0.023 | 0.002 | 15.2 | 0.10 |
| | 27 | | 0.07 | 0.24 | 1.70 | 0.008 | 0.005 | 0.11 | 0.02 | 0.071 | 0.155 | 0.055 | 0.059 | - | 14.1 | 0.13 |
| | 28 | | 0.08 | 0.23 | 2.13 | 0.009 | 0.006 | 0.09 | 0.13 | 0.089 | 0.160 | 0.053 | 0.056 | 0.001 | 10.8 | 0.15 |
| | 29 | | 0.07 | 0.19 | 1.73 | 0.010 | 0.004 | 0.08 | 0.15 | 0.096 | 0.160 | 0.052 | 0.019 | 0.003 | 11.0 | 0.12 |
| | 30 | | 0.08 | 0.19 | 1.80 | 0.009 | 0.006 | 0.09 | 0.13 | 0.088 | 0.166 | 0.053 | 0.052 | 0.001 | 10.6 | 0.14 |

In Table 2 above, the remaining components are Fe and inevitable impurities.

[Table 3]

| Division | No | Steel types | Porosity in weld zone (%) | | Fracture position in weld zone | |
|---|---|---|---|---|---|---|
| | | | Ar+10%CO$_2$ | Ar+20%CO$_2$ | Ar+10%CO$_2$ | Ar+20%CO$_2$ |
| Inventive example | 1 | Steel material 1 | 0.0 | 0.0 | ○ | ○ |
| | 2 | | 0.0 | 0.0 | ○ | ○ |
| | 3 | | 0.0 | 0.0 | ○ | ○ |
| | 4 | | 2.7 | 1.5 | ○ | ○ |
| | 5 | | 0.0 | 0.0 | ○ | ○ |
| | 6 | Steel material 2 | 0.0 | 0.0 | ○ | ○ |
| | 7 | | 3.5 | 2.2 | ○ | ○ |
| | 8 | | 0.0 | 0.0 | ○ | ○ |
| | 9 | | 3.2 | 1.8 | ○ | ○ |
| | 10 | | 0.0 | 0.0 | ○ | ○ |
| | 11 | Steel material 3 | 0.0 | 0.0 | ○ | ○ |
| | 12 | | 0.5 | 0.2 | ○ | ○ |
| | 13 | | 0.3 | 0.1 | ○ | ○ |
| | 14 | | 0.9 | 0.4 | ○ | ○ |
| | 15 | | 0.4 | 0.0 | ○ | ○ |
| | | | 33.1 | 10.0 | X | ○ |
| Comparative example | 12 | Steel material 1 | 40.0 | 13.1 | X | X |
| | 3 | | 24.6 | 9.2 | X | ○ |
| | 4 | | 7.8 | 22.3 | ○ | X |
| | 5 | | 19.2 | 18.5 | X | X |
| | 6 | | 46.0 | 42.7 | X | X |
| | 7 | | 44.2 | 41.8 | X | X |
| | 8 | | 35.6 | 38.2 | X | X |
| | 9 | | 9.9 | 15.7 | ○ | X |
| | 10 | | 23.8 | 14.5 | X | X |
| | 11 | Steel material 2 | 35.3 | 9.8 | X | ○ |
| | 12 | | 43.6 | 15.7 | X | X |
| | 13 | | 29.4 | 10.0 | X | ○ |
| | 14 | | 8.5 | 25.4 | ○ | X |
| | 15 | | 23.5 | 19.7 | X | X |
| | 16 | | 48.8 | 45.3 | X | X |
| | 17 | | 46.5 | 43.6 | X | X |
| | 18 | | 37.8 | 40.1 | X | X |
| | 19 | | 9.7 | 16.9 | ○ | X |
| | 20 | | 37.8 | 28.3 | X | X |
| | 21 | Steel material 3 | 49.2 | 19.4 | X | X |
| | 22 | | 53.8 | 25.3 | X | X |

(continued)

| | | | | | |
|---|---|---|---|---|---|
| | 23 | | 35.6 | 15.6 | X | X |
| | 24 | | 26.4 | 36.8 | X | X |
| | 25 | | 47.6 | 23.5 | X | X |
| | 26 | | 35.3 | 21.3 | X | X |
| | 27 | | 54.7 | 51.7 | X | X |
| | 28 | | 59.2 | 49.3 | X | X |
| | 29 | | 45.8 | 42.4 | X | X |
| | 30 | | 24.3 | 19.1 | X | X |

As shown in Table 1 to 3 above, in the case of Inventive Examples 1 to 15 satisfying both an alloy composition of a welding metal and Relational expressions 1 and 2, a length fraction occupied by pore defects is 10% or less (including 0%), with respect to the entire length of the welding metal, and furthermore, it can be seen that a fracture position of a weld zone is excellent as a welding base material or a heat-affected zone.

In this regard, Comparative Examples 1, 11 and Comparative Examples 4 and 5, 14 and 15 and 21 to 30 illustrate cases in which Relational expressions 1 and 2 are outside the scope of the present disclosure, and it can be confirmed that a high porosity of a weld zone is shown in any one protective gas, or a high porosity of a weld zone is shown in all protective gases, and as a result, a fracture position of the weld zone also occurs in the welding metal.

In addition, in Comparative Examples 2 and 3, 9 and 10, 12 and 13, and 19 and 20 not satisfying Relational expression 2, a high porosity of a weld zone is shown in any one protective gas, or a high porosity of a weld zone is shown in all protective gases, so that as a result, a fracture position of the weld zone also occurs in the welding metal.

In Comparative Examples 6 and 8 and 16 and 18 not satisfying Relational expression 1, it can be confirmed that a high porosity of a weld zone is shown in all protective gases, so that as a result, it can be confirmed that a fracture position of the weld zone also occurs in the welding metal.

**Claims**

1. A gas shielded arc welding metal, a welding metal obtained by gas shielded arc welding a welding base material, comprising by wt%:
0.001 to 0.30% of C, 0.25% or less of Si (excluding 0%), 0.50 to 3.00% of Mn, 0.030% or less of P (excluding 0%), 0.030% or less of S (excluding 0%), 0.50% or less of Cr (excluding 0%), 0.60% or less of Mo (excluding 0%), less than 0.07% of Al (excluding 0%), 0.40% or less of Ni (excluding 0%), 0.50% or less of Cu (excluding 0%), less than 0.07% of Ti (excluding 0%), with a balance of Fe and other unavoidable impurities, the welding metal satisfying Relational expression 1 and Relational expression 2,

$$[\text{Relational expression 1}]$$

$$3.5 \leq [Si] \times 100/[Mn] \leq 8.5$$

$$[\text{Relational expression 2}]$$

$$[Ti] + [Al] < 0.07$$

in Relational expression 1 and Relational expression 2 above, [Si], [Mn], [Ti], and [Al] represent a weight percent content of each element in parentheses for a welding metal.

2. The gas shielded arc welding metal of claim 1, wherein the welding metal includes Si in the range of 0.05 to 0.15%.

3. The gas shielded arc welding metal of claim 1, wherein the welding metal further includes at least one of 0.10% or less of Nb, 0.10% or less of V, and 0.10% or less of Zr.

4. The gas shielded arc welding metal of claim 1, wherein the welding metal further includes 0.01% or less of **B.**

5. The gas shielded arc welding metal of claim 1, wherein the welding metal satisfies a length fraction occupied by pore defects of 10% or less (including 0%), with respect to the entire length of the welding metal.

6. The gas shielded arc welding metal of claim 1, wherein the welding base material is a hot-dip galvanized steel sheet having a hot-dip galvanized layer formed on the surface.

7. The gas shielded arc welding metal of claim 1, wherein the welding base material includes by wt%:
0.04 to 0.18% of C, 2.0% or less of Si (including 0%), 0.5 to 3.0% of Mn, 2.0% or less of Cr (including 0%), 2.0% or less of Mo (including 0%), 0.01 to 0.1% of Al, 0.05% or less of P (excluding 0%), 0.05% or less of S (excluding 0%), with a balance of Fe and other unavoidable impurities.

8. The gas shielded arc welding metal of claim 7, wherein the welding base material further includes at least one of 0.20% or less of Ti, 0.10% or less of Nb, and 0.10% or less of Cu.

9. The gas shielded arc welding metal of claim 1, wherein the welding base material has a thickness of 0.8 to 4.0mm.

10. An automotive part having the welding metal of claim 1.

## INTERNATIONAL SEARCH REPORT

| International application No. |
|---|
| **PCT/KR2023/002019** |

**A. CLASSIFICATION OF SUBJECT MATTER**

**B23K 35/30**(2006.01)i; **B23K 9/29**(2006.01)i; **C22C 38/14**(2006.01)i

According to International Patent Classification (IPC) or to both national classification and IPC

**B. FIELDS SEARCHED**

Minimum documentation searched (classification system followed by classification symbols)

B23K 35/30(2006.01); B23K 35/02(2006.01); B23K 9/00(2006.01); B23K 9/02(2006.01); B23K 9/23(2006.01); C21D 8/02(2006.01); C22C 38/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 가스 실드(gas shield), 아크 용접(arc welding), 용접 금속(welding metal), 탄소(C), 규소(Si), 망간(Mn), 인(P), 황(S), 크롬(Cr), 몰리브텐(Mo), 알루미늄(Al), 니켈(Ni), 구리(Cu), 티타늄(Ti)

**C. DOCUMENTS CONSIDERED TO BE RELEVANT**

| Category* | Citation of document, with indication, where appropriate, of the relevant passages | Relevant to claim No. |
|---|---|---|
| X | KR 10-2021-0135284 A (NIPPON STEEL CORPORATION) 12 November 2021 (2021-11-12)<br>See paragraph [0003]; and claim 1. | 1-5,10 |
| Y | | 6-9 |
| Y | KR 10-2015-0133838 A (NISSHIN STEEL CO., LTD.) 30 November 2015 (2015-11-30)<br>See paragraphs [0083]-[0089]; and claim 1. | 6-9 |
| A | KR 10-2021-0107596 A (HYUNDAI WELDING CO., LTD.) 01 September 2021 (2021-09-01)<br>See paragraph [0001]; and claims 1-4. | 1-10 |
| A | KR 10-2020-0071772 A (NIPPON STEEL CORPORATION) 19 June 2020 (2020-06-19)<br>See paragraph [0123]; and claim 1. | 1-10 |
| A | JP 5623413 B2 (NIPPON STEEL & SUMITOMO METAL) 12 November 2014 (2014-11-12)<br>See claims 1-7. | 1-10 |

☐ Further documents are listed in the continuation of Box C.      ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **20 October 2023** | **20 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/002019**

| Patent document cited in search report | | | Publication date (day/month/year) | Patent family member(s) | | | Publication date (day/month/year) |
|---|---|---|---|---|---|---|---|
| KR | 10-2021-0135284 | A | 12 November 2021 | CN | 113614270 | A | 05 November 2021 |
| | | | | CN | 113614270 | B | 04 October 2022 |
| | | | | EP | 3950996 | A1 | 09 February 2022 |
| | | | | EP | 3950996 | A4 | 25 January 2023 |
| | | | | JP | 7143938 | B2 | 29 September 2022 |
| | | | | MX | 2021011371 | A | 13 October 2021 |
| | | | | US | 2022-0220595 | A1 | 14 July 2022 |
| | | | | WO | 2020-196875 | A1 | 01 October 2020 |
| KR | 10-2015-0133838 | A | 30 November 2015 | CA | 2905623 | A1 | 02 October 2014 |
| | | | | CN | 105121681 | A | 02 December 2015 |
| | | | | CN | 105121681 | B | 26 April 2017 |
| | | | | EP | 2980237 | A1 | 03 February 2016 |
| | | | | EP | 2980237 | A4 | 30 November 2016 |
| | | | | JP | 2014-189812 | A | 06 October 2014 |
| | | | | JP | 6049516 | B2 | 21 December 2016 |
| | | | | KR | 10-2210135 | B1 | 01 February 2021 |
| | | | | MX | 2015013538 | A | 05 February 2016 |
| | | | | MY | 171301 | A | 08 October 2019 |
| | | | | TW | 201443280 | A | 16 November 2014 |
| | | | | TW | I618816 | B | 21 March 2018 |
| | | | | US | 10100395 | B2 | 16 October 2018 |
| | | | | US | 2016-0032438 | A1 | 04 February 2016 |
| | | | | US | 2019-0010596 | A1 | 10 January 2019 |
| | | | | WO | 2014-156671 | A1 | 02 October 2014 |
| KR | 10-2021-0107596 | A | 01 September 2021 | KR | 10-2020-0011506 | A | 03 February 2020 |
| | | | | KR | 10-2322430 | B1 | 09 November 2021 |
| KR | 10-2020-0071772 | A | 19 June 2020 | BR | 112020007551 | A2 | 24 September 2020 |
| | | | | CA | 3079810 | A1 | 27 June 2019 |
| | | | | CN | 111479652 | A | 31 July 2020 |
| | | | | JP | 2019-107697 | A | 04 July 2019 |
| | | | | JP | 6573056 | B1 | 11 September 2019 |
| | | | | JP | 7006576 | B2 | 10 February 2022 |
| | | | | MX | 2020005717 | A | 25 September 2020 |
| | | | | US | 2021-0086313 | A1 | 25 March 2021 |
| | | | | WO | 2019-124305 | A1 | 27 June 2019 |
| JP | 5623413 | B2 | 12 November 2014 | CN | 102548703 | A | 04 July 2012 |
| | | | | CN | 102548703 | B | 13 May 2015 |
| | | | | IN | 2544DEN2012 | A | 28 August 2015 |
| | | | | KR | 10-2012-0062784 | A | 14 June 2012 |
| | | | | KR | 10-2014-0114878 | A | 29 September 2014 |
| | | | | MX | 2012003512 | A | 08 May 2012 |
| | | | | MY | 161851 | A | 15 May 2017 |
| | | | | TW | 201125675 | A | 01 August 2011 |
| | | | | TW | I412422 | B | 21 October 2013 |
| | | | | WO | 2011-037272 | A1 | 31 March 2011 |
| | | | | WO | 2011-037272 | A4 | 03 June 2011 |

Form PCT/ISA/210 (patent family annex) (July 2022)

**EP 4 527 542 A1**

**Patent documents cited in the description**

- JP 2019118274 A